# EUROPEAN PATENT SPECIFICATION

(11) **EP 1 821 582 B1**
(45) Date of publication and mention of the grant of the patent: **31.12.2008**
(21) Application number: 06101708.3
(22) Date of filing: 15.02.2006
(51) Int. Cl.: H05B 39/04

(54) **System and method for controlling an illumination device**
System und Verfahren zum Betreiben einer Beleuchtungseinrichtung
Système et procédé pour controller un dispositif d'éclairage

(43) Date of publication of application: 22.08.2007
(73) Proprietor: Fagerhults Belysning AB, 566 80 Habo (SE)
(72) Inventor: Govén, Tommy, 131 41 Nacka (SE)
(74) Representative: Lind, Urban Arvid Oskar

(56) References cited:
- EP-A- 0 902 604
- US-A- 4 347 461
- US-A- 4 701 669
- US-A- 6 025 679

## Description

### Technical field

The present invention relates to a system for controlling an illumination device. The present invention also relates to a corresponding method for controlling an illumination device.

### Technical background

There is a growing understanding of the need to provide workspace environmental control in modern office establishments. For example, some studies have suggested a link between an office worker's sense of comfort and well-being and the worker's productivity. A workspace environmental control system is therefore preferably used, and such a system must include at least one lighting device that provides for a lighting level that the worker perceives as adequate for the task at hand, without producing undue glare.

Furthermore, in order to reduce energy consumption in office establishments, and to in the most efficient way make use of natural lighting, a number of different schemes have been developed to automatically control illumination levels. Typically, the light level within a workspace is reduced when it is sensed that the amount of sunlight that enters the room increases and/or if it is sensed that the worker leaves the workspace.

A system for controlling the level of light at a work plane within a building is disclosed in US 4 701 669. In this system the light is supplied from sources of light including sunlight and at least one artificial light source. The system is arranged to compensating for variations in sunlight within the building to produce a substantially constant light level at the work plane.

Further attention is drawn to US 4 347 461 which discloses a circuit for controlling the power supplied to a lamp. The circuit includes a sensor for measuring light reflected from a work surface and another sensor directed towards the lamp for measuring a portion of the light emitted by the lamp. The measurements provided by the sensors are used for keeping the light at the work surface constant even when the amount of light from example a window is changing.

However, the disclosed systems focuses on lighting at the workplane and therefore fails to provide for an overall control of the lighting in the room.

Hence, there is a need for an improved system for controlling at least one illumination device, which substantially overcomes the disadvantages of the prior art, and more specifically to overcome the problems with the overall control of the lighting in for example an establishment.

### Summary of the invention

The above object is met by a system for controlling at least one illumination device as defined in claim 1 below, and a method for controlling at least one illumination device as defined in claim 10. The appended sub-claims define advantageous embodiments in accordance with the present invention.

According to an aspect of the invention, there is provided a system for controlling at least one illumination device, wherein the system comprises a first light sensor arranged to measure a first light intensity reflecting from a first surface, a second light sensor arranged to measure a second light intensity reflecting from a second surface, and a control unit. The control unit is adapted to calculate a first intensity difference between the first measured light intensity and a first intensity reference value, calculate a second intensity difference between the second measured light intensity and a second intensity reference value, and adjust the at least one illumination device such that the intensity differences are minimized.

It is possible to arrange the system inside an establishment where an illumination control system according to the present invention may be useful. Examples of such establishments are cafeterias, offices, industrial areas, warehouses, and retail and department stores. The person skilled in the art understands that the present invention furthermore can be arranged outdoors, for example to control the amount of light that illuminates an outdoor wall, or to control the amount of light that illuminates an outdoor road sign.

This aspect of the present invention provides for the possibility to in a more accurate way control the overall lighting inside an establishment, or outdoors onto for example a wall, since at least two different light sensors are used to measure the reflecting light levels from at least two different surfaces in the establishment. Furthermore, as the light reflecting from the surface is measured rather than incident light on the surface, the measured light intensities will more accurately correspond to the actual light that a person perceives. The intensity reference values can for example be predefined values reflecting suitable illumination levels at the at least two individual surfaces. As understood by the person skilled in the art, the intensity reference values may of course be adjustable.

The first surface is preferably a work plane, and the second surface is preferably an ambient surface within the visual surroundings of the work plane, such as for example a wall or a roof in the ambience of the work plane. The term "work plane" generally relates to a visual task area at which work is done where luminance is specified and measured. For office applications, this is typically a horizontal plane 75 centimeters above the floor (e.g. desk height). A work plane can also be the active task area within an industrial environment. The Furthermore, the person skilled in the art realizes that the second surface can be an ambient surface within the immediate or more remote visual surroundings of the work plane. The light at the ambient surface can for example relate to the adaptation of the eyes, while the light at the visual task area for example can be set to the human need. The person skilled in the art realizes that the visual task area also can relate to for example a roof, a floor, a wall, or a similar surface.

In case that the illumination control system comprises more than one illumination device, such as two illumination devices, the two illumination devices can be arranged to respectively illuminate the two surfaces. For example, a first illumination device, such as a task light or a spot light (luminary), can be arranged to illuminate the work plane, and a second illumination device can be arranged to illuminate the immediate visual surroundings of the work plane, including the ambient surface as well as the background area in any plane. As understood by the person skilled in the art, it would be possible to use more than two illumination devices, and the control unit can be adapted to receive intensity measurements from more than two light sensors.

Preferably, the control unit is further adapted to calculate an intensity ratio between the first measured light intensity and the second measured light intensity, calculate a ratio difference between the intensity ratio and a ratio reference value, and adjust the illumination device such that the ratio difference is minimized. By calculating a ratio between the first light intensity and the second light intensity, it is possible to, for example minimize the glare discomfort experienced by the user. Since large brightness disparities in the field of view can cause glare discomfort, it is best to have a visual environment in which the illumination is within a required intensity ratio. Various standard organs, for example the Illuminating Engineering Society (IES), have established certain maximum intensity ratios which should not be exceeded. The intensity ratio should not exceed 3:1 between the task area and the immediate visual surroundings (about 25 degrees), nor should the ratio exceed 10:1 between the task area and more remote visual surroundings (IES, 1981). The person skilled in the art realizes that other intensity ratios can be used, and that the intensity ratios can be predefined or adjustable values. It should be noted that either of the first surface or the second surface can be used as the "master surface" in relation to the intensity ratio. It would for example be possible to set an intensity reference value for the second surface (e.g. a wall), and a ratio reference value, and let the first surface (e.g. an office desk or a task area) depend on the ratio and the second reference value.

In an embodiment of the present invention, at least one of the reference values is provided by a user through a user interface. The user interface can for example be arranged as a rotatable switch, such as a dimmer switch, adapted to provide predefined reference values depending on the setting of the switch. In a more advanced version of an implementation of the present invention, it would be possible to connect a graphical user interface to the illumination control system, and allow for the user to provide the first intensity reference value, the second intensity reference value, and the ratio reference value independently of each other. Furthermore, the user interface may be implemented as a software application that can be controlled by a user with the use of a personal computer, for example through a web-interface.

In an embodiment of the present invention, the system further comprises a temperature sensor for sensing temperature and providing a temperature signal to the control unit. Furthermore, the control unit can be adapted to adjust the measured light intensities to compensate for a temperature deviation. Generally, light sensor produce a small amount of dark current offset along with the intensity measurement, which depends on the temperature and the inherent characteristics of the light sensor. Hence, to achieve accurate intensity measurements, the dark current offset has to adjusted for, for example by using a temperature sensor connected the control unit.

Preferably, the light sensors are provided with a filter adapted to selectively allow for transmission of light. The filters are preferably adapted to cooperate with the sensitivity characteristics of the light sensor such that the light sensor together with the filter for example has a transmission of light between 380 nm - 780 nm, and more preferably between 450 nm - 700 nm. The wavelength range 390 nm - 780 nm represents the eyes sensitivity range, also referred to as the visible light spectrum. Research indicates that there are three kinds of cones in the eye, each sensitive to its own range of wavelengths within the visible light spectrum. These three kinds of cones are referred to as red cones, green cones, and blue cones because of their respective sensitivity to the wavelengths of light which are associated with red, green and blue. The green cone is the most sensitive, having an "active" sensitivity range of 450 nm - 700 nm, which also corresponds to the main daylight sensitivity of the eye.

Alternatively, the filter can be adapted to selectively allow transmission of light between 380 nm - 550 nm. Research indicates (for example in "The effects of light on human health and behavior: relevance to architectural lighting", Symposium '04 'Light and Health: non-visual effects. CIE, Vienna, 2004, by Brainard, G.C. and J.P. Hanifin) that a second, non-visual photoreceptor system drives the body's internal clock, which sets sleep patterns and other physiological and behavioral functions, and that the body's natural biological clock is more sensitive to shorter wavelength blue light than it is to the longer wavelength green light. Furthermore, research has shown that blue wavelengths increase the serotonin levels. For example, if there is an interest in enhancing the circadian regulation, the wavelength region 380 nm - 550 nm can be emphasized, and especially within the wavelength region 446 nm - 477 nm. As understood by the person skilled in the art, it would be possible to use other wavelength intervals to adapt the control system for use in different types of environments with focus on different physical and psychological aspects.

Furthermore, it is advantageous if the light sensors are adapted to have a reception angle of 1° - 60°, more preferably 10° - 30°. When the reception angle is reduced to close to 1°, the amount of light entering the light sensor is very small, providing a weak lighting signal, and hence expensive amplification has to be done to achieve accurate measurements with a minimum amount of noise. Similarly, when the reception angle is increased to about 60° the amount of light entering the light sensor will be significantly large, providing a strong lighting signal, and hence expensive electronics has to be used to attenuate the lighting signal within the interesting measurement interval. A reception angle of 10° will provide for a satisfactory measurement area when for example measuring the reflected light from a task area. Similarly, 30° will provide for an advantageous averaging when measuring an ambient surface within the immediate visual surroundings of the task area. Preferably, the system according to the present invention is adapted to measure light having a luminance range between 0,1 - 10000 cd/m², more preferably between 1 - 8000 cd/m² , and most preferably between 3 - 1500 cd/m². The person skilled in the art realizes that for example different types of filter could allow for other luminance ranges. The luminance range 3 - 1500 cd/m² is preferred for indoor application.

According to another aspect of the present invention there is provided a method for controlling at least one illumination device, comprising the steps of measuring a first light intensity reflecting from a first surface by means of a first light sensor, measuring a second light intensity reflecting from a second surface by means of a second light sensor, calculating a first intensity difference between the first light intensity and a first reference value, calculating a second intensity difference between the second light intensity and a second reference value, and adjusting the at least one illumination device such that the intensity differences are minimized. This method provides in a similar manner as describe above the possibility to in a more accurate way control the overall lighting in for example an establishment since at least two different light sensors are used to measure the light intensity at least two different surfaces in for example the establishment.

Furthermore, the illumination control system according to the invention is advantageously used as a component in for example, but not limited to, an illumination arrangement, comprising at least one adjustable illumination device, and an illumination control system as described above. The illumination arrangement can for example be arranged indoor within an establishment, where the establishment has at least one window. In this case, the illumination system can for example further comprise means for adjusting the amount of light passing through the window.

Further features of, and advantages with, the present invention will become apparent when studying the appended claims and the following description. Those skilled in the art realize that different features of the present invention can be combined to create embodiments other than those described in the following.

### Brief description of the drawings

These and other aspects of the present invention will now be described in more detail, with reference to the appended drawings showing currently preferred embodiments of the invention, in which
Figure 1 is a block diagram showing an illumination control system connected to a light control interface according to a currently preferred embodiment of the present invention;
Figure 2 is a graph illustrating the relative sensitivity of the eye; and
Figure 3 illustrates an illumination arrangement arranged in an establishment.

### Detailed description of the preferred embodiment

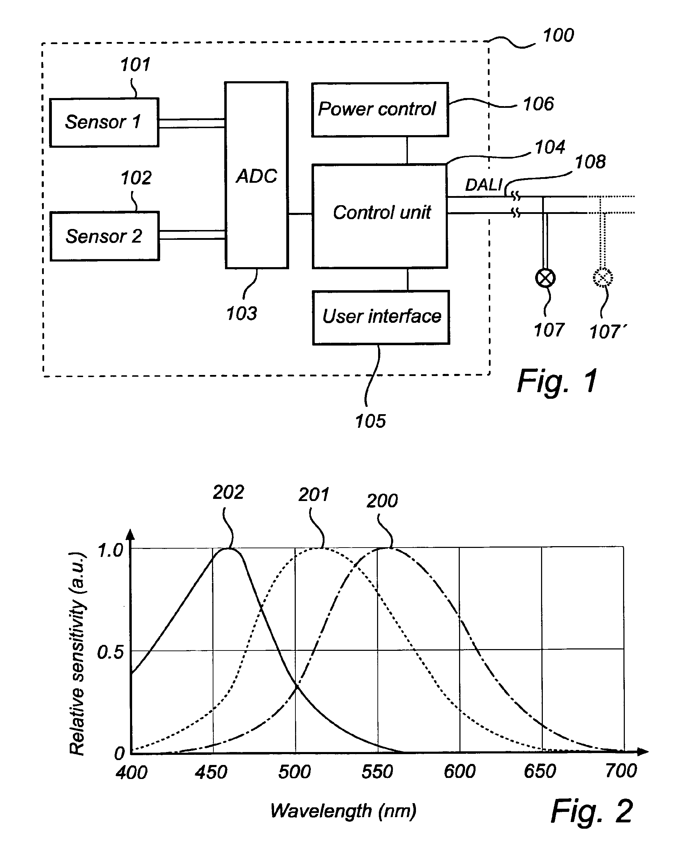

Figure 1 is a block diagram illustrating a control system 100 according to the present invention. The control system 100 comprises a first light sensor 101 and a second light sensor 102, adapted to measure the amount of the perceived light (i.e. light level or luminous intensity) reflecting from a first and a second surface (not shown). Each of the light sensors 101, 102, generates an analog light level signal that depends on the amount of light that impinge on the active sensor area. This relation depends on the characteristics of the specific light sensor component. The analog light level signals (for example within the range of 1 nA to 1µA) are amplified using an amplifier (not shown) that can be integrated together with the sensors. The amplified analog light level signals, for example amplified to a voltage range of 0 - 5 volts, are provided to an analog-to-digital converter (ADC) 103, where they are converted to for example two 8-bit digital representations of the analog light level signals. The digital light level representations are provided to a control unit 104 in which they are converted from light level values (volts) to luminance (candela/square meter). Luminance is a photometric measure of the density of luminous intensity on a surface in a given direction. It describes the amount of light that passes through or is emitted from a specific area, and falls within a given solid angle.

The conversion can be preformed using techniques well known in the art, or by providing the control unit 104 with a volt-to-cd/m² look-up table (LUT) as bit converting means to carry out the luminous intensity to luminance conversion, thereby forming luminance values for each of the light sensors 101, 102. The conversion parameters provided in the LUT can for example be obtained by an earlier performed calibration measurement cycle using for example a high-end Luminance Meter. During this calibration measurement cycle, the luminous intensity measurement results provided by the light sensors are compared to the luminance measurement results provided by the high-end Luminance Meter, and the comparison results in conversion parameters.

The control unit 104 can furthermore be adapted to calculate an intensity ratio between the digital light level representations, or a luminance ratio between the converted luminance values, from the light sensors 101, 102. Either of these ratios, or either of the digital light level representations, can be compared with reference values provided by a user through a user interface 105, thereby generating difference values. The user interface 105 can for example be arranged as a rotatable switch, such as a dimmer switch, adapted to provide reference values depending on the setting of the switch. In a more advanced version of an implementation of the present invention, it would be possible to connect a graphical user interface to the illumination control system, and allow for the user to provide the first intensity reference value, the second intensity reference value, and the ratio reference value independently of each other. Furthermore, the user interface may be implemented as a software application that can be controlled by a user with the use of a personal computer, for example through a web-interface. The person skilled in the art rapidly realizes that it would be possible to use other types of user interfaces, such as for example a wirelessly controlled user interface.

Alternatively, it would be possible to only provide the first intensity reference value using the dimmer switch, have a predefined default ratio value provided to the control unit 104, and calculate the second intensity reference value in the control unit 104 by dividing the default ratio value with the first intensity reference value. This implementation provides for a simple and inexpensive control of the control system 100.

The control unit 104 is furthermore adapted to after comparing the measurement results and/or the ratios with the provided reference values adjust at least one light source 107, 107' using a light control interface 108, such as for example the DALI light control interface, such that the difference values are minimized. The DALI light control interface is a bi-directional, digital protocol developed by lighting manufacturers for the control of multiple light sources and their light source levels in for example fluorescent HID, LED, and incandescent lamps.

The control unit 104 may include a microprocessor, microcontroller, programmable digital signal processor or another programmable device. The control unit 104 may also, or instead, include an application specific integrated circuit, a programmable gate array, programmable array logic, a programmable logic device, or a digital signal processor. Where the control unit 104 includes a programmable device such as the microprocessor or microcontroller mentioned above, the processor may further include computer executable code that controls operation of the programmable device. The control system 100 further comprises a power control circuit 106 that provides the above mentioned components with a stable power supply.

Figure 2 is a graph illustrating the relative sensitivity of the eye, in which the curve 200 illustrates the daylight sensitivity of the eye (i.e. the V(λ) curve according to Commission Internationale de l'Éclairage, CIE), the curve 201 illustrates the evening sensitivity of the eye, and the curve 201 illustrates the "biological sensitivity" of the eye. The light sensors 101, 102 can each be provided with filters that are transparent to either or a combination of the wavelength ranges indicated by the curves 200 - 203. For example in one embodiment of the present invention, the control system is provided with three light sources. In this embodiment, for example in an indoor office environment, the first and the second sensors are provided with a filter being transparent to light having wavelengths in the range indicated by the curve 200, and the third sensor is provided with a filter being transparent to light having wavelengths in the range indicated by the curve 202. The first and the second sensors monitors the light level at the work plane and in the immediate visual surroundings of the work plane, respectively, while the third sensor monitors the light level at the roof. This embodiment provides for the ability to control the light at the work plane, having a lighting in the immediate visual surroundings that for example relates to a predefined default lighting ratio, for example an intensity ratio of 3:1 between the work plane and the immediate visual surroundings, while at the same time adapt the overall lighting such that the office environment has a positive effect on the human health and behavior, by means of the "biological" measurements provided by the third sensor.

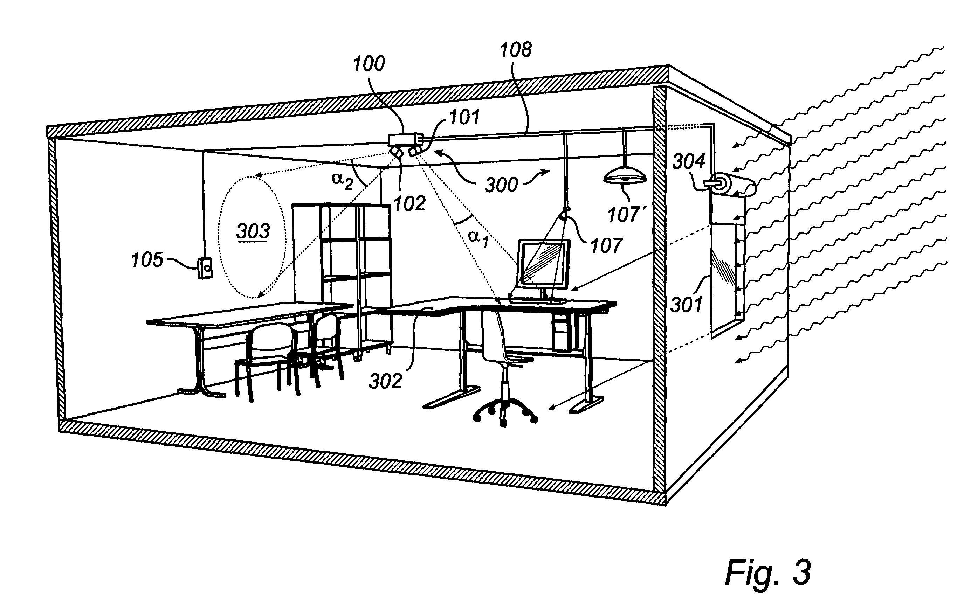

Figure 3 illustrates an exemplary illumination arrangement 300 arranged in an establishment, such as for example an office having a window 301. The control system 100, comprising the first and the second light sensors 101, 102 together with the control logic and the control interface 108 described above are arranged together in a unit. The person skilled in the art realizes that the system can be distributed, having for example one sensor arranged together with a light source, while the remaining components of the system 100 are arranged in the unit. In figure 3, the first sensor 101 is adapted to have a reception angle α₁ of 10°, while the second sensor 102 is adapted to have a reception angle of 30°. A reception angle of 10° will provide for a satisfactory measurement area when for example measuring the reflected light from a work plane 302. Similarly, a reception angle α₂ of 30° will provide for an advantageous averaging when measuring an ambient surface 303 within the visual surroundings of the work plane 302. The reception angle can for example be provided by means of a focus lens. The first sensor 101 is adjusted to monitor and measure the light level at the first surface 303, in this case an office desk. The second sensor 102 is adjusted to monitor and measure the light level at the second surface 303, in this case an office wall. As outdoor light, for example form the sun or from an outdoor light post enters the office through the window 301, the first and the second light sensor will respectively continuously monitor the surfaces 302, 303. As described above, the measurement results are compared to reference values provided by the user interface 105. A ratio is calculated, the ratio and the provided reference values are compared, and difference values are calculated. If the difference values are above or below a predefined threshold, for example 1% - 10% of one of the reference values, the intensities of the light sources 107, 107' are adjusted to minimize the difference values, by transmitting control signals to the light sources 107, 107' over the DALI interface 108.

The measuring and monitoring can be preformed at predefined time intervals, such as for example once every second, once every minute, or once every hour. By performing subsequent measurements, and average the measurement result, it is possible to minimized light flickering that otherwise would occur when for example a cloud moves away from the sun and light enters the room. It is preferred to perform a measurement cycle directly if the user interface 105 is adjusted.

The light source 107 can for example be a spot light that focuses the light onto the work plane 302, while the light source 107' for example can be a lighting fixture mounted in the roof. In the case that it is indicated that not even a large decrease of the intensities will manage to minimize the difference values below the threshold, means 304 for adjusting the amount of light passing through the window 301, such as for example an electric roller blind or an electric curtain, can be controlled over the DALI interface 108 to limit the amount of light that enters the window 301. Furthermore, it is preferred to limit the amount of light that enters the window 301 last, as natural light has a positive effect on the working environment, and since the maximized use of natural lighting will decreases the cost and reduce energy consumption when illuminating for example an office environment.

The person skilled in the art realizes that the present invention by no means is limited to the preferred embodiments described above. On the contrary, many modifications and variations are possible within the scope of the appended claims. For example, it is possible to furthermore provide the control system with an occupancy sensor to further control the overall lighting within an establishment to further reduce energy consumption. Furthermore, a control system according to the present invention can preferably be used to measure the daylight factor. The daylight factor is defined as the ratio of interior luminance at a given point on a given plane (usually the work plane) to the exterior luminance (reference) under the same overcast sky conditions, e.g. the CIE overcast sky distribution.

## Claims

1. A system (100) for controlling at least one illumination device (107, 107'), said system (100) comprising:
- a first light sensor (101) arranged to measure a perceived first light intensity reflecting from a first surface (302): and
- a second light sensor (102)
**characterized in that** the second light sensor (102) is arranged to measure a perceived second light intensity reflecting from a second surface (303), the second surface is different from first surface and the system (100) further comprises a control unit (104), wherein said control unit (104) is adapted to:
- calculate a first intensity difference between said perceived first measured light intensity and a first intensity reference value;
- calculate a second intensity difference between said perceived second measured light intensity and a second intensity reference value; and
- adjust said at least one illumination device (107, 107') such that said intensity differences are minimized.

2. A system (100) according to claim 1, wherein said first surface (302) is a work plane, and wherein said second surface (303) is an ambient surface within the visual surroundings of said work plane.

3. A system (100) according to any one of the preceding claims, wherein said control unit (104) is further adapted to:
- calculate an intensity ratio between said first measured light intensity and said second measured light intensity;
- calculate a ratio difference between said intensity ratio and a ratio reference value; and
- adjust said at least one illumination device (107, 107') such that said ratio difference is minimized.

4. A system (100) according to any one of the preceding claims, wherein at least one of said reference values are provided by a user through a user interface (105).

5. A system (100) according to any one of the preceding claims, wherein said system (100) further comprises a temperature sensor for sensing temperature and providing a temperature signal to said control unit (104), and wherein said control unit (104) is further adapted to adjust said measured light intensities to compensate for a temperature deviation.

6. A system (100) according to any one of the preceding claims, wherein said light sensors (101,102) are provided with a filter adapted to selectively allow for transmission of light.

7. A system (100) according to claim 6, wherein said filter is adapted to selectively allow for transmission of light between 380 nm - 780 nm, more preferably between 450 nm - 700 nm.

8. A system (100) according to claim 6, wherein said filter is adapted to selectively allow for transmission of light between 380 nm - 550 nm.

9. A system (100) according to any of the preceding claims, wherein said light sensors (101, 102) are adapted to have a reception angle (α₁, α₂) of 1 ° - 60°, more preferably 10° - 30°.

10. Method for controlling at least one illumination device (107, 107'), comprising the steps of:
- measuring a perceived first light intensity reflecting from a first surface (302) by means of a first light sensor (101); and
- measuring a second light intensity bv means of a second light sensors (102),
**characterized in that** the second light sensor (102) is arranged to measure a perceived second light intensity reflecting from a second surface (303) the second surface is different from first surface and the method further comprises the steps of:
- calculating a first intensity difference between said perceived first light intensity and a first intensity reference value;
- calculating a second intensity difference between said perceived second light intensity and a second intensity reference value; and
- adjusting said at least one illumination device (107, 107') such that said intensity differences are minimized.

11. Method according to claim 10, wherein said first surface (302) is a work plane, and wherein said second surface (303) is an ambient surface within the immediate visual surroundings of said work plane.

12. Method according to any one of claims 10-11, further comprising the steps of:
- calculating a measurement ratio between said first measured light intensity and said second measured light intensity;
- calculating a ratio difference between said measurement ratio and a ratio reference value; and
- adjusting said at least one illumination device (107, 107') such that said ratio difference is minimized.

13. Method according to any one of claims 10 - 12, further comprising the steps of:
- arranging a temperature sensor adapted to provide a temperature signal; and
- adjusting said measured light intensities to compensate for a temperature deviation.

14. Method according to any one of claims 11 - 13, wherein at least one of said reference values are provided by a user through a user interface (105).

15. An illumination arrangement (300), comprising:
- at least one adjustable illumination device (107, 107'); and
- a system (100) according to any one of claims 1 - 9.

16. An illumination arrangement according to claim 15, wherein said control system (100) is arranged within an establishment having at least one window (301), and wherein said control system (100) further comprises means (304) for adjusting the amount of light passing through said window (301).

## Patentansprüche

1. System (100) zum Steuern mindestens einer Beleuchtungsvorrichtung (107, 107'), wobei das System (100) Folgendes umfasst:
- einen ersten Lichtsensor (101), der dafür ausgelegt ist, eine wahrgenommene erste Lichtintensität zu messen, die von einer ersten Oberfläche (302) reflektiert wird, und
- einen zweiten Lichtsensor (102),
**dadurch gekennzeichnet, dass** der zweite Lichtsensor (102) dafür ausgelegt ist, eine wahrgenommene zweite Lichtintensität zu messen, die von einer zweiten Oberfläche (303) reflektiert wird, wobei die zweite Oberfläche von ersten Oberfläche verschieden ist, wobei das System (100) des Weiteren eine Steuereinheit (104) umfasst, wobei die Steuereinheit (104) dafür geeignet ist:
- einen ersten Intensitätsunterschied zwischen der wahrgenommenen ersten gemessenen Lichtintensität und einem ersten Intensitätsreferenzwert zu berechnen;
- einen zweiten Intensitätsunterschied zwischen der wahrgenommenen zweiten gemessenen Lichtintensität und einem zweiten Intensitätsreferenzwert zu berechnen; und
- die mindestens eine Beleuchtungsvorrichtung (107, 107') dergestalt zu justieren, dass die Intensitätsunterschiede minimiert werden.

2. System (100) nach Anspruch 1, wobei die erste Oberfläche (302) eine Arbeitsebene ist und wobei die zweite Oberfläche (303) eine Umgebungsoberfläche in der sichtbaren Umgebung der Arbeitsebene ist.

3. System (100) nach einem der vorangehenden Ansprüche, wobei die Steuereinheit (104) des Weiteren dafür geeignet ist:
- ein Intensitätsverhältnis zwischen der ersten gemessenen Lichtintensität und der zweiten gemessenen Lichtintensität zu berechnen;
- eine Verhältnisdifferenz zwischen dem Intensitätsverhältnis und einem Verhältnisreferenzwert zu berechnen; und
- die mindestens eine Beleuchtungsvorrichtung (107, 107') dergestalt zu justieren, dass die Verhältnisdifferenz minimiert wird.

4. System (100) nach einem der vorangehenden Ansprüche, wobei mindestens einer der Referenzwerte durch einen Benutzer über eine Benutzerschnittstelle (105) eingegeben wird.

5. System (100) nach einem der vorangehenden Ansprüche, wobei das System (100) des Weiteren einen Temperatursensor umfasst, um die Temperatur zu detektieren und ein Temperatursignal an die Steuereinheit (104) auszugeben, und wobei die Steuereinheit (104) des Weiteren dafür geeignet ist, die gemessenen Lichtintensitäten zu justieren, um eine Temperaturabweichung zu kompensieren.

6. System (100) nach einem der vorangehenden Ansprüche, wobei die Lichtsensoren (101, 102) mit einem Filter ausgestattet sind, der dafür geeignet ist, selektiv Licht durchzulassen.

7. System (100) nach Anspruch 6, wobei der Filter dafür geeignet ist, selektiv Licht zwischen 380 nm und 780 nm und besonders bevorzugt zwischen 450 nm und 700 nm durchzulassen.

8. System (100) nach Anspruch 6, wobei der Filter dafür geeignet ist, selektiv Licht zwischen 380 nm und 550 nm durchzulassen.

9. System (100) nach einem der vorangehenden Ansprüche, wobei die Lichtsensoren (101, 102) für einen Empfangswinkel (α₁, α₂) von 1° - 60° und besonders bevorzugt von 10° - 30° ausgelegt sind.

10. Verfahren zum Steuern mindestens einer Beleuchtungsvorrichtung (107, 107'), wobei das Verfahren die folgenden Schritte umfasst:
- Messen einer wahrgenommenen ersten Lichtintensität, die von einer ersten Oberfläche (302) reflektiert wird, mittels eines ersten Lichtsensors (101); und
- Messen einer zweiten Lichtintensität mittels eines zweiten Lichtsensors (102),
**dadurch gekennzeichnet, dass** der zweite Lichtsensor (102) dafür konfiguriert ist, eine wahrgenommene zweite Lichtintensität zu messen, die von einer zweiten Oberfläche (303) reflektiert wird, wobei die zweite Oberfläche von der ersten Oberfläche verschieden ist, und wobei das Verfahren des Weiteren die folgenden Schritte: umfasst
- Berechnen eines ersten Intensitätsunterschieds zwischen der wahrgenommenen ersten Lichtintensität und einem ersten Intensitätsreferenzwert;
- Berechnen eines zweiten Intensitätsunterschieds zwischen der wahrgenommenen zweiten Lichtintensität und einem zweiten Intensitätsreferenzwert; und
- Justieren der mindestens einen Beleuchtungsvorrichtung (107, 107') dergestalt, dass die Intensitätsunterschiede minimiert werden.

11. Verfahren nach Anspruch 10, wobei die erste Oberfläche (302) eine Arbeitsebene ist und wobei die zweite Oberfläche (303) eine Umgebungsoberfläche in der unmittelbaren sichtbaren Umgebung der Arbeitsebene ist.

12. Verfahren nach einem der Ansprüche 10-11, das des Weiteren die folgenden Schritte umfasst:
- Berechnen eines Messungsverhältnisses zwischen der ersten gemessenen Lichtintensität und der zweiten gemessenen Lichtintensität;
- Berechnen einer Verhältnisdifferenz zwischen dem Messungsverhältnis und einem Verhältnisreferenzwert; und
- Justieren der mindestens einen Beleuchtungsvorrichtung (107, 107') dergestalt, dass die Verhältnisdifferenz minimiert wird.

13. Verfahren nach einem der Ansprüche 10-12, das des Weiteren die folgenden Schritte umfasst:
- Anordnen eines Temperatursensors, der dafür geeignet ist, ein Temperatursignal auszugeben; und
- Justieren der gemessenen Lichtintensitäten, um eine Temperaturabweichung zu kompensieren.

14. Verfahren nach einem der Ansprüche 11 - 13, wobei mindestens einer der Referenzwerte durch einen Benutzer über eine Benutzerschnittstelle (105) eingegeben wird.

15. Beleuchtungsanordnung (300), die Folgendes umfasst:
- mindestens eine justierbare Beleuchtungsvorrichtung (107, 107'); und
- ein System (100) nach einem der Ansprüche 1 - 9.

16. Beleuchtungsanordnung nach Anspruch 15, wobei das Steuerungssystem (100) innerhalb einer Einrichtung angeordnet ist, die mindestens ein Fenster (301) aufweist, und wobei das Steuerungssystem (100) des Weiteren Mittel (304) zum Justieren der Lichtmenge, die durch das Fenster (301) dringt, umfasst.

## Revendications

1. Système (100) de contrôle d'au moins un dispositif d'éclairage (107, 107'), ledit système (100) comprenant :
- un premier capteur de lumière (101) agencé afin de mesurer une première intensité lumineuse perçue se réfléchissant depuis une première surface (302) ; et
- un deuxième capteur de lumière (102),
**caractérisé en ce que** le second capteur de lumière (102) est agencé afin de mesurer une seconde intensité lumineuse perçue se réfléchissant depuis une seconde surface (303), la seconde surface étant différente de la première surface, et le système (100) comprenant en outre une unité de commande (104), moyennant quoi ladite unité de commande (104) est adaptée afin de :
- calculer une première différence d'intensité entre ladite première intensité lumineuse mesurée perçue et une première valeur de référence d'intensité ;
- calculer une seconde différence d'intensité entre ladite seconde intensité lumineuse mesurée perçue et une seconde valeur de référence d'intensité ; et
- régler ledit au moins un dispositif d'éclairage (107, 107') de telle sorte que lesdites différences d'intensité soient minimisées.

2. Système (100) selon la revendication 1, dans lequel ladite première surface (302) est un plan de travail, et dans lequel ladite seconde surface (303) est une surface adjacente à l'intérieur des abords visuels dudit plan de travail.

3. Système (100) selon une quelconque des revendications précédentes, dans lequel ladite unité de commande (104) est en outre adaptée afin de :
- calculer un rapport d'intensité entre ladite première intensité lumineuse mesurée et ladite seconde intensité lumineuse mesurée ;
- calculer une différence de rapport entre ledit rapport d'intensité et une valeur de référence de rapport ; et
- régler ledit au moins un dispositif d'illumination (107, 107') de telle sorte que ladite différence de rapport soit minimisée.

4. Système (100) selon une quelconque des revendications précédentes, dans lequel au moins une desdites valeurs de référence sont fournies par un utilisateur via une interface d'utilisateur (105).

5. Système (100) selon une quelconque des revendications précédentes, dans lequel ledit système (100) comprend en outre un capteur de température pour détecter une température et fournir un signal de température à ladite unité de commande (104), et dans lequel ladite unité de commande (104) est en outre adaptée afin de régler lesdites intensités lumineuses mesurées afin de compenser un écart de température.

6. Système (100) selon une quelconque des revendications précédentes, dans lequel lesdits capteurs de lumière (101, 102) sont pourvus d'un filtre adapté afin de permettre sélectivement une transmission de lumière.

7. Système (100) selon la revendication 6, dans lequel ledit filtre est adapté afin de permettre sélectivement une transmission de lumière entre 380 nm- 780 nm, de manière encore préférée entre 450 nm-700 nm.

8. Système (100) selon la revendication 6, dans lequel ledit filtre est adapté afin de permettre sélectivement une transmission de lumière entre 380 nm- 550 nm.

9. Système (100) selon une quelconque des revendications précédentes, dans lequel lesdits capteurs de lumière (101, 102) sont adaptés afin d'avoir un angle de réception (α1, α2) de 1°-60°, de manière encore préférée 10°-30°.

10. Procédé de contrôle d'au moins un dispositif d'éclairage (107, 107') comprenant les étapes consistant à :
- mesurer une première intensité lumineuse perçue se réfléchissant depuis une première surface (302) au moyen d'un premier capteur de lumière (101) ; et
- mesurer une seconde intensité lumineuse au moyen d'un second capteur de lumière (102),
**caractérisé en ce que** le second capteur de lumière (102) est agencé afin de mesurer une seconde intensité lumineuse perçue se réfléchissant depuis une seconde surface (303), la seconde surface étant différence de la première surface et le procédé comprenant en outre les étapes consistant à :
- calculer une première différence d'intensité entre ladite première intensité lumineuse perçue et une première valeur de référence d'intensité ;
- calculer une seconde différence d'intensité entre ladite seconde intensité lumineuse perçue et une seconde valeur de référence d'intensité ; et
- régler ledit au moins un dispositif d'éclairage (107, 107'), de telle sorte que lesdites différences d'intensité soient minimisées.

11. Procédé selon la revendication 10, dans lequel ladite première surface (302) est un plan de travail, et dans lequel ladite seconde surface (303) est une surface adjacente à l'intérieur des abords visuels immédiats dudit plan de travail.

12. Procédé selon une quelconque des revendications 10 à 11, comprenant en outre les étapes consistant à :
- calculer un rapport de mesure entre ladite première intensité lumineuse mesurée et ladite seconde intensité lumineuse mesurée ;
- calculer une différence de rapport entre ledit rapport de mesure et une valeur de référence de rapport ; et
- régler ledit au moins un dispositif d'éclairage (107, 107') de telle sorte que ladite différence de rapport soit minimisée.

13. Procédé selon une quelconque des revendications 10 à 12, comprenant en outre les étapes consistant à :
- disposer un capteur de température adapté afin de fournir un signal de température ; et
- régler lesdites intensités lumineuses mesurées afin de compenser un écart de température.

14. Procédé selon une quelconque des revendications 11 à 13, dans lequel au moins une desdites valeurs de référence sont fournies par un utilisateur via une interface d'utilisateur (105).

15. Dispositif d'éclairage (300), comprenant :
- au moins un dispositif d'éclairage réglable (107, 107') ; et
- un système (100) selon une quelconque des revendications 1 à 9.

16. Dispositif d'éclairage selon la revendication 15, dans lequel ledit système de contrôle (100) est agencé à l'intérieur d'un établissement ayant au moins une fenêtre (301), et dans lequel ledit système de contrôle (100) comprend en outre des moyens (304) pour régler la quantité de lumière passant à travers ladite fenêtre (301).
